# EUROPÄISCHE PATENTSCHRIFT

(11) **EP 1 998 964 B1**
(45) Veröffentlichungstag und Bekanntmachung des Hinweises auf die Patenterteilung: **21.12.2011**
(21) Anmeldenummer: 07723720.4
(22) Anmeldetag: 29.03.2007
(51) Int. Cl.: B60C 29/02

(54) **REIFENVENTIL, VENTILSYSTEM UND REIFEN**
TIRE VALVE, VALVE SYSTEM, AND TIRE
VALVE DE PNEU, SYSTÈME DE VALVE ET PNEU

(30) Priorität: 30.03.2006 DE 202006005269 U
(43) Veröffentlichungstag der Anmeldung: 10.12.2008
(73) Patentinhaber: Alligator Ventilfabrik GmbH, 89537 Giengen (DE)
(72) Erfinder: PALAORO, Renato, 89518 Heidenheim a.d. Brenz (DE)
(74) Vertreter: Nüsse, Stephan
(86) Internationale Anmeldenummer: PCT/EP2007/002776
(87) Internationale Veröffentlichungsnummer: WO 2007/112920

(56) Entgegenhaltungen:
- DE-A1- 2 813 742
- DE-A1- 10 314 783

## Beschreibung

Die Erfindung betrifft ein Reifenventil nach dem Oberbegriff des Anspruchs 1, insbesondere ein Gas- und/oder Luftreifenventil, mit einem eine Felgenbohrung in einer Felge, insbesondere einer Fahrzeugfelge, durchgreifenden Ventilkörper, der einen im montierten Zustand auf einer Seite der Felge, insbesondere im Felgeninneren, angeordneten unteren Ventilkörperabschnitt sowie einen aus der Felgenbohrung ragenden oberen Ventilkörperabschnitt ausbildet, und im Bereich des oberen Ventilkörperabschnitts zum Zusammenwirken mit einer. Überwurfmutter ausgebildet ist. Die Erfindung betrifft weiter ein Ventilsystem und einen Reifen.

Aus dem Stand der Technik sind für die Abdichtung gegen Luftverlust zwischen einem Luftreifenventil und der dieses umgebenden Ventilbohrung (im weiteren ach: Felgenbohrung) in der Luftreifenfelge verschiedene Ansätze bekannt. Zum einen existieren sog. Schulter- bzw. Flachdichtungen wie z. B. in DE 28 13 742. Zum anderen werden O-Ring-Dichtungen verwendet.

Beide Lösungen sind jedoch, jeweils für sich betrachtet, technisch nachteilig: Eine typischerweise aus einem flachen Gummiring bestehende und ggf. mit einem Schulterabschnitt versehene Schulter-bzw. Flachdichtung stellt retativ geringe Ansprüche an die Ebenheit der Auflagefläche (d.h. den außengelegenen flachen Randabschnitt der Felgenbohrung) sowie an die Lochtoleranzen dieser, Felgenbohrung da das groß Gummivolumen derartiger Dichtungen Abweichungen in einfacher Weise ausgleicht. Nachteilig ist jedoch, dass beim Einbau von Ventilen mit derartigen Dichtungen (niedrige) Drehmomentgrezen nicht überschritten werden dürfen, dies würde zur Zerstörung der Dichtung führen. Da sich zudem die Dichtungselemente unter Druck verformen, ergeben sich in der Regel und in nachteiliger Weise sehr geringe Lösemomente für die das Ventil befestigende Überwurfmutter.

Dagegen ermöglichten die bekannten O-Ring-Dichtungen sehr viel höhere Anzugsmomente, da die Überwurfmutter unmittelbar auf den Randabschnitt der Felgenbohrung greift und insoweit ein Metall-Metall-Kontakt besteht; vorteilhaft sind entsprechend hohe Lösemomente für die befestigende Überwurfmutter erzielbar. Dagegen ist nachteilig, dass eine derartige O-Ring-Dichtung sehr hohe Anforderungen an die Ebenheit der Auflagefläche ihm Felgenbohrungs-Randbereich sowie die Bohrungstoleranzen selbst stellt so dass hier teils beträchtlicher zusätzlicher Aufwand für die Fertigung und Montage notwendig ist.

Die genannten Nachteile werden gemäß DE 20 2004 020 121 U1 mit einem Reifenventil beseitigt, bei dem der untere Ventilkörperabschnitt einen ein Widerlager für einen flachen Randabschnitt der Felgenbohrung anbietenden Ringabsatz ausbildet, in welchen eine zum Randabschnitt offene Ringnut eingeformt ist und in welchem der Randabschnitt durch Anziehen der Überwurfmutter verspannbar ist. Darüber hinaus ist zum Dichten der Felgenbohrung eine spezielle Formdichtung vorgesehen. Gemäß dieser Lösung ist die Formdichtung zum Einlegen in den Ringabsatz vorgesehen. Das in dieser Form vorgeschlagene Reifenventil bietet zwar durch den Ringabsatz eine Begrenzung der Pressung der Ventildichtung, hat jedoch durch den Ringabsatz mit innenliegender Ventildichtung einen vergleichsweise großen maximalen Durchmesser. Dies führt dazu, dass sich das Reifenventil für einige Anwendungen als vergleichsweise groß erweist. Insbesondere hat sich gezeigt, dass sich der maximale Durchmesser eines solchen Reifenventils als oftmals zu groß für einen Übergangsradius von einem Tiefbett zur Steilschulter einer Felge erweist. Ein Reifenventil der eingangs genannten Art ist in DE 103 14 783 A1 beschrieben, welches jedoch noch verbesserungswürdig ist.

Wünschenswert wäre ein Reifenventil, das sich in verbesserte Weise in einen solchen Übergangsradius einer Felge einpassen lässt und generell auch bei Engstellen einer Felge in verbesserter Weise handhabbar ist.

An dieser Stelle setzt die Erfindung an, deren Aufgabe es ist, ein Reifenventil der eingangs genannten Art anzugeben, das eine verbesserte Geometrie aufweist und dennoch in der Lage ist, eine übermäßige Pressung einer Ventildichtung zu begrenzen.

Die Aufgabe wird durch die Erfindung mittels dem eingangs genannten Reifenventil gelöst, bei dem erfindungsgemäß die Merkmale des kennzeichnenden Teils des Anspruchs 1 vorgesehen sind. Der untere Ventilkörperabschnitt bildet einen ein Widerlager für einen flachen Randabschnitt der Felgenbohrung anbietenden Anschlagbund in Form eines stufenförmigen Absatzes aus, welcher Anschlagbund den unteren Ventilkörperabschritt gegenüber dem oberen Ventilkörperabschnitt über eine lichte Weite der Felgenbohrung hinaus verbreitert, und gegen welchen der Randabschnitt durch Anziehen der überwurfmutter verspannbar ist.

Die Erfindung geht von der Überlegung aus, dass sich ein Reifenventil im Hinblick auf enge Übergangsradien im Felgenbett, insbesondere im Hinblick auf einen vergleichsweise engen Übergangsradius des Tiefbetts zur Steilschulter eines Felgenbettes in seiner Geometrie vergleichsweise schlank auslegen lassen sollte. Insbesondere geht die Erfindung von der Überlegung aus, dass sich ein maximaler Durchmesser des in DE 20 2004 020 121 U1 offenbarten Reifenventils verringern lassen sollte, wobei die grundsätzlichen dort offenbarten. Vorteile eines Reifenventils erhalten bleiben sollten. Die Erfindung hat erkannt, dass sich ein dort offenbarter Ringabsatz in erfinderischer Weise durch einen Auschlagbund ersetzen lässt, welcher den unteren Ventilkörperabschnitt gegenüber dem oberen ventilkörperabschnitt über eine lichte Weite der Felgenbohrung hinaus verbreitert. Der Anschlagbund bildet eine neuartige Begrenzung der Pressung einer Ventildichtung, insbesondere eines Dichtrings, da der Anschlagbund im montierten Zustand an einer innenseite der Felge anliegt, insbesondere auf der flachen Umrandung eines Felgenloches aufliegt. Der Anschlagbund verbreitert den unteren Ventilkörperabschnitt gegenüber dem oberen Ventilkörperabschnitt, in radialer Richtung insbesondere kontinuierlich, d.h. in radialer Richtung ohne unterbrechung oder unnötige weitere Verbreiterung, über eine lichte Weite der Felgebohrung hinaus. Die Erfindung hat erkannt, dass eine Felgendichtung außerhalb des Anschlagbunds, d.h. den Anschlagbund umgebend, angebracht sein kann. Erfindungsgemäß weist der untere Ventilkörperabschnitt eine zu der Seite hin dem Anschlagbund nachgeordnete weitere verbreiterung zum Halten eines Dichtringes auf. Im Unterschied zum vorgenannten Stand der Technik hat dies den Vorteil, dass sich eine Felgendichtung am Außenbereich des Reifenventils, ähnlich einer Formgummidichtung, einem Radius, insbesondere einem Übergangsradius des Tiefbettes zur Steilschulter einer Felge anpassen kann. In vorteilhafter Weise wird eine verbesserte Dichtwirkung auch im Bereich des genannten Übergangsradius erreicht und darüber hinaus aufgrund des Anschlagbundes eine begrenzung einer Felgendichtungsverformung erreicht. Das hat den Vorteil, das insbesondere eine überlastung eines Elastomerwerkstoffes einer Felgendichtung durch ein evtl. zu hohes Drehmoment einer Überwurf- oder Bundmutter vermieden wird. Darüber hinaus hat dies auch den Vorteil, dass ein Verlust des Anzugsmomentes in der Verschraubung durch eine evtl. Relaxation einer Felgendichtung vermieden wird.

Vorteilhafte Weiterbildungen der Erfindung sind den Unteransprüchen zu entnehmen und geben im einzelnen vorteilhafte Möglichkeiten an, das oben erläuterte Konzept im Rahmen der Aufgabenstellung, sowie hinsichtlich weiterer Vorteile zu realisieren.

Insbesondere ist der Anschlagbund des untere Ventilabschnitts in radialer Richtung kontinuierlich verbreiternd ausgebildet. Zweckmäßigerweise ist dabei eine den unteren Ventilkörperabschnitt kontinuierlich verbreiternde in radaler Richtung durchgehende Anschlagfläche vorgesehen. Dadurch wird ein unnötig hoher maximaler Durchmesser des unteren Ventilkörperabschnitts vermieden und eine sichere Anlage an der flachen Umrandung eines Felgenloches erzielt. Der Anschlagbund kann je nach Bedarf den unteren Ventilkörperabschnitt vollumfänglich umgeben oder nur in einem oder mehreren Teilumfangsbereichen verbreiten. Die zuerst genannte Variante ermöglicht eine besonders gute Anlage des Dichtringes, während die zuletzt genannte Variante unter Erhaltung dieses Vorteils zu einer Materialeinsparung und Gewichtsreduzierung des Ventils führt.

Insbesondere weist der Anschlagbund einen äußeren Durchmesser auf, der geringer als ein innerer Durchmesser einer zugeordneten Ventildichtung, insbesondere eines zugeordneten Dichtrings ist. Zweckmäßigerweise ist dazu ein äußerer Durchmesser passgenau auf den inneren Durchmesser einer Ventildichtung, insbesondere eines Dichtrings, ausgelegt. Aufgrund des in erläuterter Weise "außenliegenden" Dichtringes ist eine Dichtwirkung im Rahmen des oben erläuterten Konzepts verbessert, da sich dieser in vorteilhafter Weise im Übergangsradius eines Felgenbettes einpassen kann.

Die Erfindung führt auch auf ein Ventilsystem mit einem Reifenventil der oben erläuterten Art und einem Dichtring, wobei erfindungsgemäß der Anschlagbund vom Dichtring umgeben ist.

Die Erfindung führt auch auf einen Reifen mit einer Felge und einem Reifenventil der oben erläuterten Art.

Ausführungsbeispiele der Erfindung werden nun nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der vorstehenden Beschreibung, in der Zeichnung sowie in den Ansprüchen offenbarten Merkmale der Erfindung können sowohl einzeln als auch in beliebiger Kombination für die Weiterbildung der Erfindung wesentlich sein. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein.

Zum weiteren Verständnis der Erfindung wird nun in Bezug auf die Figuren der Zeichnung eine bevorzugte Ausführungsform der Erfindung erläutert. Die Zeichnung zeigt in:
- Fig. 1:: eine besonders bevorzugt Ausführungsform eines Reifenventils gemäß dem Konzept der Erfindung;
- Fig. 2:: eine mit Maßen versehene Aufsicht auf ein Felgenloch, das zur Aufnahme eines Reifenventils gemäß Fig. 1 dient;
- Fig. 3:: eine weitere besonders bevorzugte Ausführungsform eines Reifenventils in perspektivischer Ansicht (A) und in einer Ausschnittsvergrößerung (B);
- Fig. 4:: noch eine weitere besonders bevorzugte Ausführungsform eines Reifenventils in perspektivischer Ansicht (A) und in einer Ausschnittsvergrößerung (B).

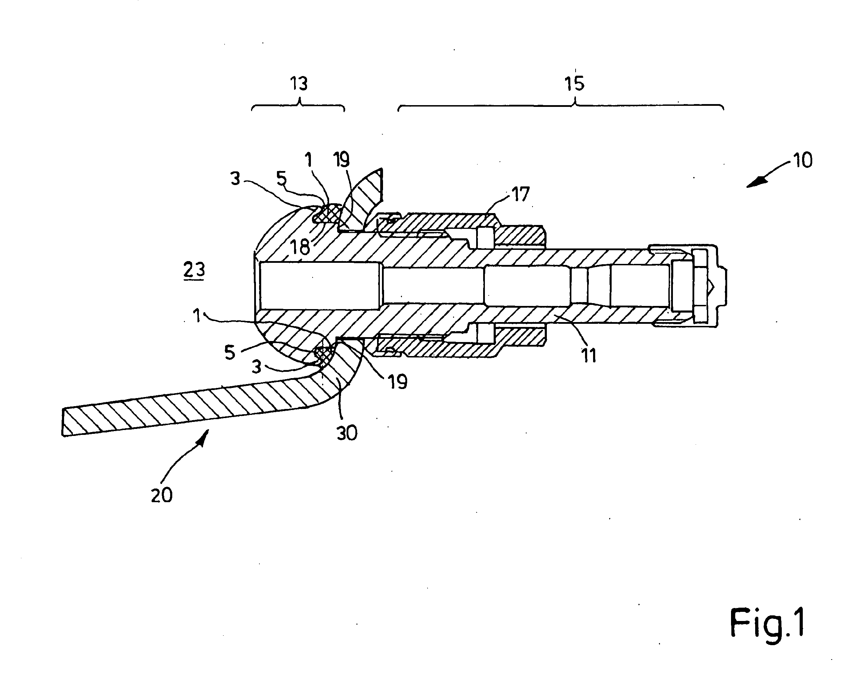

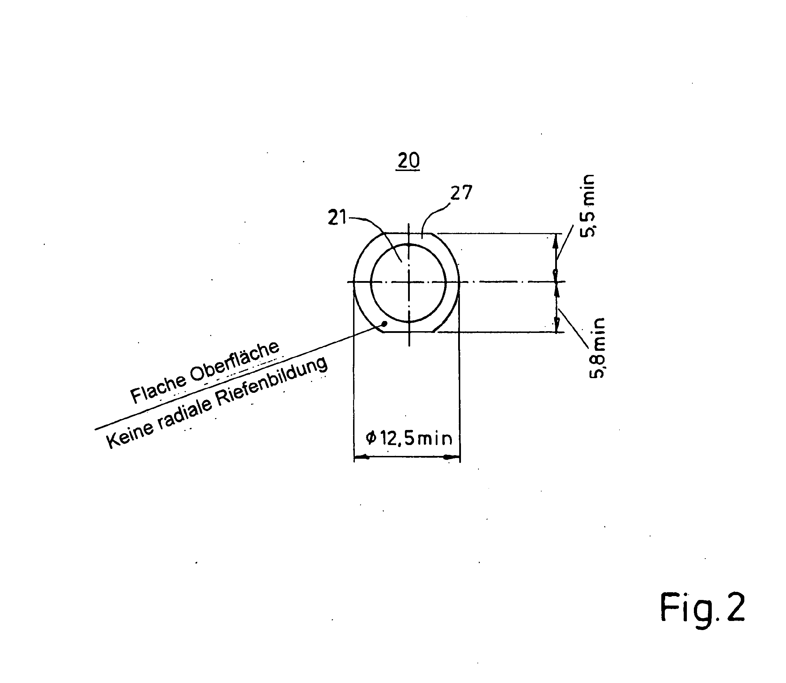

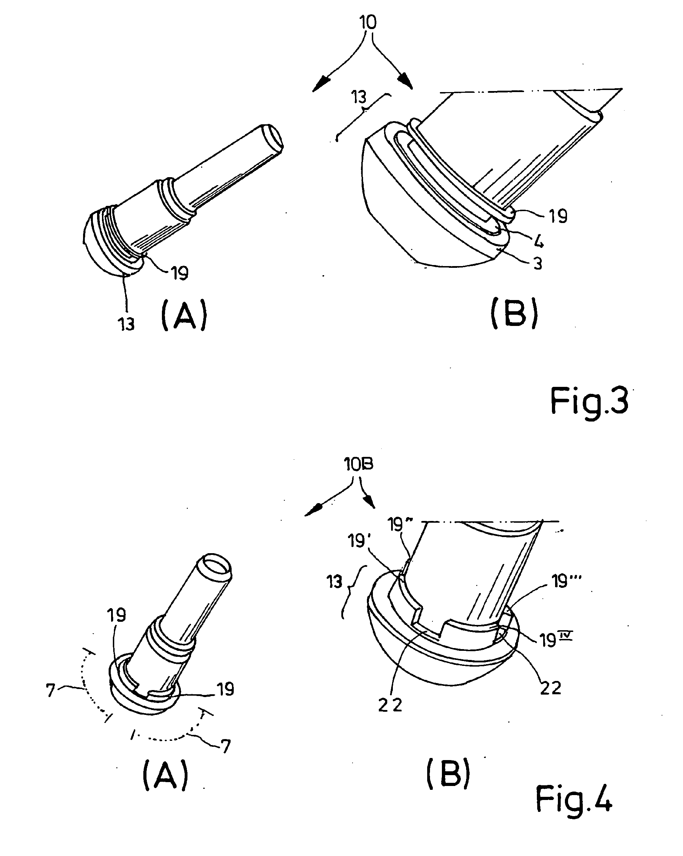

Die Fig. 1 zeigt in einer schematischen Schnittansicht eine besonders bevorzugte Ausführungsform eines Reifenventils 10 in Form eines Luftreifenventils. Der Ventilkörper 11 durchgreift im montierten Zustand eine in Fig. 2 näher gezeigte Felgenbohrung 21 einer nicht näher gezeigten Felge 20, vorliegend einer Fahrzeugfelge. Die vorliegend mit dem Bezugszeichen 23 bezeichnete Seite der Felge 20 stellt das nicht näher ausgeführte Felgeninnere dar, in das der untere Ventilkörperabschnitt 13 im montierten Zustand hineinragt, während der obere Ventilkörperabschnitt 15 über die Felge 20 hinaus nach außen ragt. Das Reifenventil 10 ist dabei im Bereich des oberen Ventilkörperabschnitts 15 mit einem nicht näher bezeichneten Gewinde zum Zusammenwirken mit einer Überwurfmutter 17 versehen. Durch Anziehen der Überwurfmutter 17 wird der Ventilkörper 11 mit seinem unteren Ventilkörperabschnitt 13 gegen das Felgenbett der Felge 20 gezogen. Gemäß dem Konzept der Erfindung bildet der untere Ventilkörperabschnitt 13 einen ein Widerlager für den in Fig. 2 näher dargestellten flachen Randabschnitt 27 der Felgenbohrung 21 anbietenden Anschlagbund 19 aus. Gemäß dem Konzept der Erfindung wird dadurch der Ventilkörper 11 sicher am Felgenbett der Felge 20 festgesetzt. Eine unnötig hohe Pressung der den Anschlagbund 19 umgebenden Dichtung wird dabei vermieden. Die in Fig. 1 gezeigte Ausführungsform des Reifenventils 10 sieht gemäß dem Konzept der Erfindung vor, dass der Anschlagbund 19 den unteren Ventilkörperabschnitt 13 gegenüber dem oberen Ventilkörperabschnitt 15 über eine lichte Weite der Felgenbohrung 21 hinaus verbreitert. Insbesondere ist bei der vorliegenden Ausführungsform eine den unteren Ventilkörperabschnitt 13 in radialer Richtung kontinuierlich verbreiternde durchgehende Anschlagfläche des Anschlagbunds 19 vorgesehen. Der Anschlagbund 19 kann dabei den unteren Ventilkörperabschnitt 13 vollumfänglich umgeben (Fig. 3) oder diesen nur in einem oder mehreren Teilumfangsbereichen verbreitern (Fig. 4). Er ist in Form eines stufenförmigen Absatzes gebildet, der wiederum von einem Dichtring 1 umgeben ist. Entsprechend ist der äußere Durchmesser des Anschlagbunds 19 passgenau auf den inneren Durchmesser des Dichtringes 1 ausgelegt. Eine unnötige Verbreiterung des Ventilkörpers 11 im direkten Nahbereich zum Felgenbett der Felge 20 wird somit vermieden. Vielmehr ist durch den außerhalb des Anschlagbunds 19 liegenden Dichtring 1 eine verbesserte Dichtwirkung im Bereich des Übergangsradius 30 zwischen dem Tiefbett zur Steilschulter der Felge 20 erreicht.

Gemäß der vorliegenden Ausführungsform wird dies zudem dadurch unterstützt, dass der untere Ventilkörperabschnitt 13 eine zum Felgeninneren 23 hin dem Anschlagbund 19 nachgeordnete weitere Verbreiterung 3 zum Halten des Dichtrings 1 aufweist. Die weitere Verbreiterung 3 umgibt dabei den unteren Ventilkörperabschnitt 13 vollumfänglich und ist in Form eines Ringabsatzes mit einer in der Ringabsatzfläche umlaufenden Nut gebildet. Die Nut 5 dient dabei zur wenigstens teilweisen Aufnahme des Dichtrings 1 und hält ihn im montierten Zustand gegen das Felgenbett der Felge 20. In vorteilhafter Weise wird durch das Zusammenwirken des Anschlagbunds 19 und der weiteren Verbreiterung 3 einerseits eine übermäßige Pressung des Dichtrings 1 vermieden und andererseits eine vorteilhafte Einpassung des Dichtrings 1 im Übergangsradius 30 erreicht. Mit anderen Worten, der Dichtring 1 wird in ausreichendem Maße zur Erhöhung der Dichtwirkung aber nicht übermäßig verformt. Demgemäß ist eine zwischen Anschlagbund 19 und weiterer Verbreiterung 3 ausgebildete Seitenfläche 18 des unteren Ventilkörperabschnitts 13 bei dieser Ausführungsform zur Anlage des Dichtrings 1 in besonderer Weise ausgebildet. Im montierten Zustand weist die Seitenfläche 18 eine Höhe auf, die - wie in Fig. 1 gezeigt - praktisch der Höhe des verformten Dichtrings 1 entspricht, wobei sich der Dichtring 1 zwischen der weiteren Verbreiterung 3 und der Felge 20 erstreckt. Eine geeignete Einpassung des Dichtrings 1 wird dadurch erreicht, dass der Dichtring 1 im nicht montierten Zustand des Reifenventils 10 eine Höhe aufweist, die etwas über der Höhe der Seitenfläche 18 des unteren Ventilkörperabschnitts 13 liegt, so dass bei der Montage des Reifenventils 10 der Dichtring 1 gemäß dem Konzept der Erfindung leicht zusammengedrückt wird und dabei seine Dichtwirkung optimiert entfaltet, wobei eine übermäßige Pressung des Dichtrings 1 durch den Anschlagbund 19 vermieden ist.

Fig. 3 zeigt eine weitere bevorzugte Ausführungsform eines Reifenventils 10A in perspektivischer Ansicht (A) und einer Detailvergrößerung (B). Vorliegend umgibt der Anschlagbund 19 den unteren Ventilkörperabschnitt 13 vollumfänglich. Zwischen dem Anschlagbund 19 und einer nachgeordneten weiteren Verbreiterung 3 ist eine Nut 4 gebildet, die in vorteilhafterweise zum Halten eines hier nicht näher dargestellten Dichtringes dienen kann. Unter Verformung des Dichtringes oder unter Nutzung eines Formdichtringes kann dieser nämlich unter Anpassung an ein in Fig. 1 gezeigtes Felgenbett, insbesondere unter Anpassung in einen Übergangsradius 30 in die Nut 4 gedrückt werden. Unter teilweiser Verformung des Dichtringes 1 führt dies zu einer verbesserten Halterung des Dichtringes und zu einer Erhöhung der Dichtwirkung.

Fig. 4 zeigt eine weitere Ausführungsform eines Reifenventils 10B in einer perspektivischen Ansicht (A) und einer vergrößerten Detailansicht (B). Vorliegend verbreitert der Anschlagbund 19 den unteren Ventilkörperabschnitt 13 nur in mehreren Teilumfangsbereichen 7, die gestrichelt angedeutet sind. Mit anderen Worten, der Anschlagbund 19 ist in Form einer den unteren Ventilkörperabschnitt in radialer Richtung kontinuierlich verbreiternden Stufe gebildet, die sich nur über einen Teilumfangsbereich 7 des unteren Ventilkörperabschnitts 13 erstreckt, oder anders formuliert, ein im Grunde vollumfänglicher Anschlagbund 19, wie er beispielsweise in Fig. 3 gezeigt ist, ist entlang des Umfanges des unteren Ventilkörperabschnitts 13 segmentiert und besteht insofern aus mehreren Anschlagbunden 19', 19", 19 "', 19"", wie diese in der Detailvergrößerung B in Fig. 4 gezeigt sind. Neben einer Material- und Gewichtsreduzierung am Reifenventil 10B wird durch die Lücken 22 wiederum eine vorteilhafte Haltefunktion für einen nicht näher dargestellten Dichtring 1 erreicht, der sich teilweise in eine Lücke 22 unter teilweiser Verformung desselben einpassen kann, insbesondere in einem in Fig. 1 näher dargestellten Übergangsradius 30. Dadurch wird ebenfalls eine Dichtwirkung erhöht.

## Patentansprüche

1. Reifenventil (10) mit einem eine Felgenbohrung (21) in einer Felge (20) durchgreifenden Ventilkörper (11),
der einen im montierten Zustand auf einer Seite (23) der Felge (20) angeordneten unteren Ventilkörperabschnitt (13) sowie einen aus der Felgenbohrung (21) ragenden oberen Ventilkörperabschnitt (15) ausbildet, und
im Bereich des oberen Ventilköperabschnitts (15) zum Zusammenwirken mit einer Überwurfmutter (17) augebildet ist, wobei
der untere Ventilkörperabschnitt (13) einen ein Widerlager für einen flachen Randabschnitt (27) der Felgenbohrung (21) anbietenden Anschlagbund (19) ausbildet, welcher den unteren Ventilkörperabschnitt (13) gegenüber dem oberen Ventilkörperabschnitt (15) über eine lichte Weite der Felgenbohrung (21) hinaus verbreitert und gegen welchen der Randabschnitt (27) durch Anziehen der Überwurfmutter (17) verspannbar ist,
**dadurch gekennzeichnet, dass** der Anschlagbund (19) in Form eines stufenförmigen Absatzes gebildet ist, wobei der untere Ventilkörperabschnitt (13) eine zu der Seite (23) hin dem Anschlagbund (19) nachgeordnete weitere Verbreiterung (3) zum Halten eines Dichtringes (1) aufweist.

2. Reifenventil (10) nach Anspruch 1, **dadurch gekennzeichnet, dass** der Anschlagbund (19) den unteren Ventilkörperabschnitt (13) in radialer Richtung kontinuierlich verbreiternd ausgebildet ist, insbesondere eine den unteren Ventilkörperabschnitt (13) kontinuierlich verbreiternde, in radialer Richtung durchgehende Anschlagfläche aufweist.

3. Reifenventil (10) nach Anspruch 1 oder 2, **dadurch gekennzeichnet, dass** der Anschlagbund (19) den unteren Ventilkörperabschnitt (13) vollumfänglich umgibt.

4. Reifenventil (10) nach Anspruch 1 oder 2, **dadurch gekennzeichnet, dass** der Anschlagbund (19) den unteren Ventilkörperabschnitt (13) nur in einem oder mehreren Teilumfangsbereichen verbreitert.

5. Reifenventil (10) nach einem der Ansprüche 1 bis 4, **dadurch gekennzeichnet, dass** der Anschlagbund (19) einen äußeren Durchmesser aufweist, der geringer als ein innerer Durchmesser eines zugeordneten Dichtrings (1) ist.

6. Ventilsystem mit einem Reifenventil (10) nach einem der Ansprüche 1 bis 5, **dadurch gekennzeichnet, dass** der Anschlagbund (19) einen äußeren Durchmesser aufweist, der passgenau auf den inneren Durchmesser eines Dichtringes (1) ausgelegt ist.

7. Reifenventil (10) nach einem der Ansprüche 1 bis 6, **dadurch gekennzeichnet, dass** der untere Ventilkörperabschnitt (13) zur Anordnung im Felgeninneren vorgesehen ist.

8. Reifenventil (10) nach einem der Ansprüche 1 bis 7, **dadurch gekennzeichnet, dass** wischen dem Anschlagbund (19) und der nächgeordneten weiteren Verbreiterung (3) eine Nut gebildet ist.

9. Reifenventil (10) nach einem der Ansprüche 1 bis 8, **dadurch gekennzeichnet, dass** eine weitere Verbreiterung (3) den unteren Ventilkörperabschnitt (13) vollumfänglich umgibt.

10. Reifenventil (10) nach einem der Ansprüche 1 bis 9, **dadurch gekennzeichnet, dass** eine weitere Verbreiterung (3) in Form eines Ringabsatzes mit einer in der Ringabsatzfläche umlaufenden Nut (5) gebildet ist, die zur wenigstens teilweisen Aufnahme eines Dichtringes (1) ausgebildet ist.

11. Reifenventil (10) nach einem der Ansprüche 1 bis 10, **dadurch gekennzeichnet, dass** eine zwischen dem Anschlagbund (19) und.einer weiteren Verbreiterung (3) ausgebildete Seitenfläche (18) des unteren Ventilkörperabschnitts (113) zur Anlage eines Dichtringes (1) ausgebildet ist, insbesondere eine Höhe aufweist, die im montierten Zustand praktisch der Höhe des Dichtringes (1) entspricht, wobei sich der Dichtring (1) zwischen der weiteren Verbreiterung (3) und der Felge (20) erstreckt.

12. Ventilsystem mit einem Reifenventils (10) nach einem der Ansprüche 1 bis 11 und einem Dichtring (1), **dadurch gekennzeichnet, dass** der Anschlagbund (19) vom Dichtring (1) umgeben ist.

13. Ventilsystem nach Anspruch 12, **dadurch gekennzeichnet, dass** eine zwischen dem Anschlagbund (19) und einer weiteren Verbreiterung (3) ausgebildete Seitenfläche (18) des unteren Ventilkörperabschnitts (13) zur Anlage des Dichtringes (1), ausgebildet ist, insbesondere eine Höhe aufweist, die im nicht-montierten Zustand geringer als die Höhe des Dichtringes (1) ist.

14. Reifen mit einer Felge (20) und einem Reifenventil (10) nach einem der Ansprüche 1 bis 11.

## Claims

1. Tyre valve (10) comprising a valve body (11) which penetrates a rim bore (21) in a rim (20), forms a lower valve body portion (13) arranged on one side (23) of the rim (20) in the mounted state as well as an upper valve body portion (15) projecting from the rim bore (21), and is formed in the region of the upper valve body portion (15) so as to cooperate with a cap nut (17), the lower valve body portion (13) forming a stop collar (19) which provides an abutment for a flat edge portion (27) of the rim bore (21) and broadens the lower valve body portion (13) relative to the upper valve body portion (15) beyond an inner width of the rim bore (21), and against which the edge portion (27) can be braced by tightening the cap nut (17), **characterised in that** the stop collar (19) is formed in the form of a stepped shoulder, the lower valve body portion (13) comprising a further broadening (3), subsequent to the stop collar (19), towards the side (23) for holding a sealing ring (1).

2. Tyre valve (10) according to claim 1, **characterised in that** the stop collar (19) is formed so as to broaden the lower valve body portion (13) continuously in the radial direction, and comprises in particular a stop face which continuously broadens the lower valve body portion (13) and extends continuously in the radial direction.

3. Tyre valve (10) according to either claim 1 or claim 2, **characterised in that** the stop collar (19) completely surrounds the lower valve body portion (13).

4. Tyre valve (10) according to either claim 1 or claim 2, **characterised in that** the stop collar (19) broadens the lower valve body portion (13) only in one or more partial circumferential regions.

5. Tyre valve (10) according to any one of claims 1 to 4, **characterised in that** the stop collar (19) has an external diameter which is smaller than an internal diameter of an associated sealing ring (1).

6. Valve system comprising a tyre valve (10) according to any one of claims 1 to 5, **characterised in that** the stop collar (19) has an external diameter which is designed to fit the internal diameter of a sealing ring (1) precisely.

7. Tyre valve (10) according to any one of claims 1 to 6, **characterised in that** the lower valve body portion (13) is provided to be arranged in the interior of the rim.

8. Tyre valve (10) according to any one of claims 1 to 7, **characterised in that** a groove is formed between the stop collar (19) and the subsequent further broadening (3).

9. Tyre valve (10) according to any one of claims 1 to 8, **characterised in that** a further broadening (3) completely surrounds the lower valve body portion (13).

10. Tyre valve (10) according to any one of claims 1 to 9, **characterised in that** a further broadening (3) is formed in the form of an annular shoulder comprising a circumferential groove (5) in the annular shoulder surface and is formed to receive a sealing ring (1) at least in part.

11. Tyre valve (10) according to any one of claims 1 to 10, **characterised in that** a lateral surface (18), formed between the stop collar (19) and a further broadening (3), of the lower valve body portion (13) is formed for abutment of a sealing ring (1) and in particular has a height corresponding in the mounted state almost to the height of the sealing ring (1), the sealing ring (1) extending between the further broadening (3) and the rim (20).

12. Valve system comprising a tyre valve (10) according to any one of claims 1 to 11 and a sealing ring (1), **characterised in that** the stop collar (19) is surrounded by the sealing ring (1).

13. Valve system according to claim 12, **characterised in that** a lateral surface (18), formed between the stop collar (19) and a further broadening (3), of the lower valve body portion (13) is formed for abutment of the sealing ring (1) and in particular has a height which in the non-mounted state is less than the height of the sealing ring (1).

14. Tyre comprising a rim (20) and a tyre valve (10) according to any one of claims 1 to 11.

## Revendications

1. Valve (10) de pneumatique, présentant un corps de valve (11) qui traverse un alésage (21) ménagé dans une jante (20),
formant à l'état monté une partie inférieure (13) de corps de valve disposée sur un côté (23) de la jante (20) ainsi qu'une partie supérieure (15) de corps de valve qui dépasse de l'alésage (21) de la jante, et
la valve étant configurée pour coopérer avec un écrou d'accouplement (17) au niveau de la partie supérieure (15) du corps de valve,
la partie inférieure (13) du corps de valve formant un contre-palier pour un collet de butée (19) qui présente une partie (27) de bordure plate de l'alésage (21) de la jante, le collet de butée élargissant la partie inférieure (13) du corps de valve par rapport à la partie supérieure (15) du corps de valve au-delà d'une largeur intérieure de l'alésage (21) de la jante et la partie de bordure (27) pouvant être serrée contre ledit collet par serrage de l'écrou d'accouplement (17),
**caractérisée en ce que**
le collet de butée (19) présente la forme d'un épaulement étagé, la partie inférieure (13) du corps de valve présentant un autre élargissement (3) disposé en aval du collet de butée (19) en direction du côté (23), pour maintenir une bague d'étanchéité (1).

2. Valve (10) de pneumatique selon la revendication 1, **caractérisée en ce que** le collet de butée (19) élargit de manière continue la partie inférieure (13) du corps de valve dans la direction radiale, présente en particulier une surface de butée continue dans la direction radiale et élargit de manière continue la partie inférieure (13) du corps de valve.

3. Valve (10) de pneumatique selon la revendication 1 ou 2, **caractérisée en ce que** le collet de butée (19) entoure la totalité de la périphérie de la partie inférieure (13) du corps de valve.

4. Valve (10) de pneumatique selon la revendication 1 ou 2, **caractérisée en ce que** le collet de butée (19) élargit la partie inférieure (13) du corps de valve uniquement en une ou plusieurs parties de sa périphérie.

5. Valve (10) de pneumatique selon l'une des revendications 1 à 4, **caractérisée en ce que** le diamètre extérieur du collet de butée (19) est plus petit que le diamètre intérieur d'une bague d'étanchéité (1) qui lui est associée.

6. Système de valve doté d'une valve (10) de pneumatique selon l'une des revendications 1 à 5, **caractérisé en ce que** le diamètre extérieur du collet de butée (19) est adapté avec précision au diamètre intérieur d'une bague d'étanchéité (1).

7. Valve (10) de pneumatique selon l'une des revendications 1 à 6, **caractérisée en ce que** la partie inférieure (13) du corps de valve est prévue pour être disposée à l'intérieur de la jante.

8. Valve (10) de pneumatique selon l'une des revendications 1 à 7, **caractérisée en ce qu'**une rainure est formée entre le collet de butée (19) et l'autre élargissement (3) disposé en aval.

9. Valve (10) de pneumatique selon l'une des revendications 1 à 8, **caractérisée en ce qu'**un autre élargissement (3) entoure la partie inférieure (13) du corps de valve sur toute sa périphérie.

10. Valve (10) de pneumatique selon l'une des revendications 1 à 9, **caractérisée en ce qu'**un autre élargissement (3) présente la forme d'un appendice annulaire doté d'une rainure périphérique (5) ménagée dans la surface de l'appendice annulaire et configuré pour reprendre au moins en partie une bague d'étanchéité (1).

11. Valve (10) de pneumatique selon l'une des revendications 1 à 10, **caractérisée en ce qu'**une surface latérale (18) de la partie inférieure (13) du corps de valve, formée entre le collet de butée (19) et un autre élargissement (3), est configurée pour placer une bague d'étanchéité (1) et présente en particulier une hauteur qui à l'état monté correspond en pratique à la hauteur de la bague d'étanchéité (1), la bague d'étanchéité (1) s'étendant entre l'autre élargissement (3) et la jante (20).

12. Système de valve doté d'une valve (10) de pneumatique selon l'une des revendications 1 à 11 et d'une bague d'étanchéité (1), **caractérisé en ce que** le collet de butée (19) est entouré par la bague d'étanchéité (1).

13. Système de valve selon la revendication 12, **caractérisé en ce qu'**une surface latérale (18) de la partie inférieure (13) du corps de valve, formée entre le collet de butée (19) et un autre élargissement (3), est configurée pour venir placer la bague d'étanchéité (1) et présente en particulier une hauteur qui à l'état non monté est plus petite que la hauteur de la bague d'étanchéité (1).

14. Pneumatique comportant une jante (20) et une valve (10) de bandage de roue selon l'une des revendications 1 à 11.
